# EUROPEAN PATENT APPLICATION

(11) **EP 2 725 381 A1**
(43) Date of publication of application: **30.04.2014**
(21) Application number: 12250164.6
(22) Date of filing: 26.10.2012
(51) Int. Cl.: G01S 13/75

(54) **Identification tag**

(71) Applicant: BAE Systems Plc, London SW1Y 5AD (GB)
(72) Inventor: The designation of the inventor has not yet been filed
(74) Representative: BAE SYSTEMS plc Group IP Department

(57) **Abstract**

There is presented an identification tag, or transponder, for modulating and returning an incident RF signal, and also a detection unit for use in conjunction with such a tag, and also a method of detecting such a tag. The identification tag comprises: a substantially planar reflector for reflecting the incident RF signal, a substantially planar array of active RF elements arranged at the reflector, each active RF element comprising a switching element, a first conductive element, and a second conductive element, the switching element electrically interconnecting the first and second conductive antenna elements, a signal generator for applying a modulating bias signal to at least one active RF element, the modulating bias signal being selectable according to a predetermined modulation scheme, the modulating bias signal thereby being configured to apply a predetermined modulation to the returned RF signal.

## Description

The present invention relates to an identification tag, which may alternatively be referred to as a transponder, for modulating and returning an incident RF signal. Further, the invention relates to detection unit for use in conjunction with such a tag. Still further, the invention relates to a method of detecting such a tag.

It may be considered known from DE4404735 to provide an identification tag or transponder such that an interrogating RF signal may selectively be weakly or strongly reflected at the tag. The tag can be considered to comprise a convex array of active RF elements which are all switched on or all switched off according to a given sequence. Such switching effects a modulated return which may then be detected at a receiver.

According to a first aspect of the present invention there is provided an identification tag for modulating and returning an incident RF signal, the identification tag comprising: a substantially planar reflector for reflecting the incident RF signal, a substantially planar array of active RF elements arranged at the reflector, each active RF element comprising a switching element, a first conductive element, and a second conductive element, the switching element electrically interconnecting the first and second conductive antenna elements, a signal generator for applying a modulating bias signal to at least one active RF element, the modulating bias signal being selectable according to a predetermined modulation scheme, the modulating bias signal thereby being configured to apply a predetermined modulation to the returned RF signal.

By providing a planar array of active RF elements, which act as a lumped impedance, the tag may apply a broad variety of modulation schemes to incident radiation. Further, the planar array can assist with minimising the overall size, and particularly the depth of the tag.

Having a broad variety of modulation schemes to select from, the tag may tend to convey more information than a mere confirmation of its presence. In particular the tag may be able to relay information relating to its local environment, or may be able to convey information relating to its state. For example the tag may be provided with a unique identification signal to distinguish it from similar tags. As a further example, the tag may be provided with a timing device and thereby be able to convey information relating to its time in deployment.

By providing that a predetermined modulation is applied to the returned RF signal, the RF returns can be associated with the particular tag to tend to improve the likelihood of tag recognition/detection.

The tag may further comprise a sensor for monitoring a parameter local to the tag, and thereby generating parameter data, the sensor being operably connected to the signal generator such that the modulating bias signal may comprise the parameter data.

As such, the tag is able to convey information from the sensor. Typically, parameters which may be monitored would be physical parameters and as such may relate to temperature, pressure, or electromagnetic fields etc.

The parameter data may be encoded within the returned RF signal using analogue modulation schemes or using digital modulation schemes such as phase shift keying (PSK).

The identification tag may further comprise a memory device for storing a predetermined pseudo noise code, the memory device being operably connected to the signal generator such that the modulating bias signal may be encoded by the predetermined pseudo noise code.

As such, the returned RF signal tends to be encoded with the pseudo noise code. Encoding the return RF signal with a pseudo noise code tends to inhibit the ability of eavesdroppers to detect the modulation. Thus the presence of the tag is easier to conceal.

Further, the provision of a pseudo noise code allows a receiver associated with the tag, and aware of the particular pseudo noise code, to correlate received signals against the pseudo noise code and thereby provide increased processing gain in respect of the tag-returned signal.

The provision of increased processing gain in turn increases the likelihood that the receiver is able to detect the tag. Thus the tag can be detected with greater confidence and/or at a greater range and/or amongst greater radio clutter.

Where the tag is intended to communicate the presence of the tag, there may be a unique pseudo noise code associated with the tag and the pseudo noise may be applied to the modulating bias signal such that the modulating bias signal comprises the pseudo noise code.

Where the tag is intended to communicate parameter data, the pseudo noise code may be applied to the parameter data by performing an exclusive or (XOR) operation, the output of which being the modulating bias signal.

The modulating bias signal may apply a false Doppler shift to the returned signal.

The provision of a false Doppler modulation scheme allows a receiver associated with the tag to apply a Doppler filter and thereby reject clutter based on the velocities implied by the returns. Once the clutter has been reflected, only the tag-returned signals, with their apparent velocity above the predetermined threshold, should be present.

The provision of increased processing gain in turn increases the likelihood that the receiver is able to detect the tag. Thus the tag can be detected with greater confidence and/or at a greater range and/or amongst greater radio clutter.

A tag accordingly may further comprise at least one further planar RF reflector, inclined to the other planar reflector to provide a corner reflector.

Such an arrangement tends to increase the radar cross section of the tag, thereby increasing the likelihood that the tag stands out from the surrounding radio clutter.

The array of active RF elements may be mounted onto the reflector.

By mounting the array on the surface itself, the size of the tag can tend to be minimised. Thus the tag can be applied to smaller objects and/or more covertly.

The signal generator may be connected to a first active element by a first connection, and may be connected to a second active element by a second connection, and operable to generate a first modulating bias signal for output to the first active element, and operable to generate a second modulating bias signal for output to the second active element, the first and second modulating bias signals being distinct.

Thus the tag may have different modulation signals applied to different active elements; that is to say the elements may be switched independently of one another. Such an arrangement should allow the array, if suitably configured and driven, to perform for example beam steering of the reflected RF signal. Thus, or otherwise, a phase taper may be created across the array.

The switching elements may be PIN diodes.

The provision of an identification tag with PIN diodes can tend to provide a particularly energy efficient tag because PIN diodes can modulate the incident radiation using very low power. Thus, where a battery is provided, the capacity of the battery can be reduced and/or the lifetime of the device can be extended.

Further, the PIN diodes are suitable for high frequency operation and so can accommodate a broad range of modulation schemes.

According to a second aspect of the present invention there is provided a detection unit for use in conjunction with an identification tag according to the first aspect of the invention, the identification tag being operable to provide a predetermined modulating bias signal, the detection unit comprising a receiver antenna, for receiving returned RF signals, a signal processor operably connected to the receiver antenna and configured to detect a returned RF signal consistent with a native or interrogatory RF signal as modulated by the predetermined modulating bias signal of the identification tag.

Thus a tag detection system is provided.

The detection unit may further comprise a signal generator for generating an interrogatory RF signal, a transmitter antenna, operably connected to the signal generator and thereby being for transmitting an interrogatory RF signal.

The provision of the transmitter can tend to reduce the analytical burden when analysing RF returns given that the form of the transmitter RF signal is fully understood. This is in contrast to the signal of opportunity approach where the receiving station does not necessarily know which particular transmitter signal will have been returned by the tag.

The detection unit may have a receiver that is a directional receiver.

As such, the receiver would be able to determine not only the presence of the tag but may also begin to draw conclusions as to the direction in which the tag is located.

According to a third aspect of the present invention there is provided a method of detecting a tag, the tag being for modulating and returning an incident RF signal, the method comprising: i Deploying the tag in an environment, the environment including at least one transmitter for transmitting a reference RF signal, ii Providing a receiver operable in the frequency range of the reference RF signal, iii At the receiver, demodulating received reference RF signals according to the modulating bias signal applied at the tag, iv determining whether a tag-modulated RF reference signal has been received, and thereby determining whether the tag is present or not, the at least one transmitter being native to the environment, and able to transmit a signal for purposes other than detecting the tag, the reference RF signal thereby being a signal of opportunity.

As such, and operator may detect the tag without being required to transmit an interrogatory signal. Thus the operator may carry less and/or more simplified equipment. Thus the operator, if wishing to draw attention to his tag monitoring activity, may monitor the tag without obviously transmitting a signal into the RF environment.

The at least one transmitter native to the environment may be at least one out of the group of: Base station transmitters for mobile telephony, ADS-B transmitters, Commercial Radio transmitters, and Television broadcast transmitters. Base station transmitters for mobile telephony may be for example GSM transmitters, HSDPA transmitters, Commercial Radio transmitters may be for example FM or AM or DAB, and Television broadcast transmitters may be for example DVB.

At least one of such reference RF signals should be likely to be present in an environment and so the tag should be operable in various environments.

The identification tag may be according to the first aspect of the invention.

The identification tag and the detection unit may be operable over theoretically any range of frequencies. However, where the system is configured to operate in the range 600MHz-1GHz, or higher, the size of the corresponding tag may be particularly suitable for application to platforms such as vehicles.

So that the invention may be well understood, aspects and embodiments thereof shall now be described with reference to the following figures, of which:
Figure 1 shows a schematic representation of a first embodiment of an identification tag,
Figure 2 shows an isometric representation of the identification tag of Figure 1 integrated into a basic corner reflector,
Figure 3 shows the integrated identification tag of Figure 2 deployed in an environment and further shows an embodiment of a combined transmitter and receiver for detecting the tag,
Figure 4a shows a representation of the waveform as may be transmitted by the combined transmitter and receiver,
Figure 4b shows a representation of a pseudo noise code,
Figure 4c shows a representation of the returns, including a return from the identification tag, which may be received from the environment shown in Figure 3,
Figure 4d shows a representation of an output of the detection unit,
Figure 5 shows a flow diagram outlining the steps involved in detecting an identification tag using a combined transmitter and receiver,
Figure 6 shows a flow diagram outlining the steps involved in detecting an identification tag using a receiver and signals of opportunity,
Figure 7 shows a flow diagram for the step of analysing Doppler shifted returns.

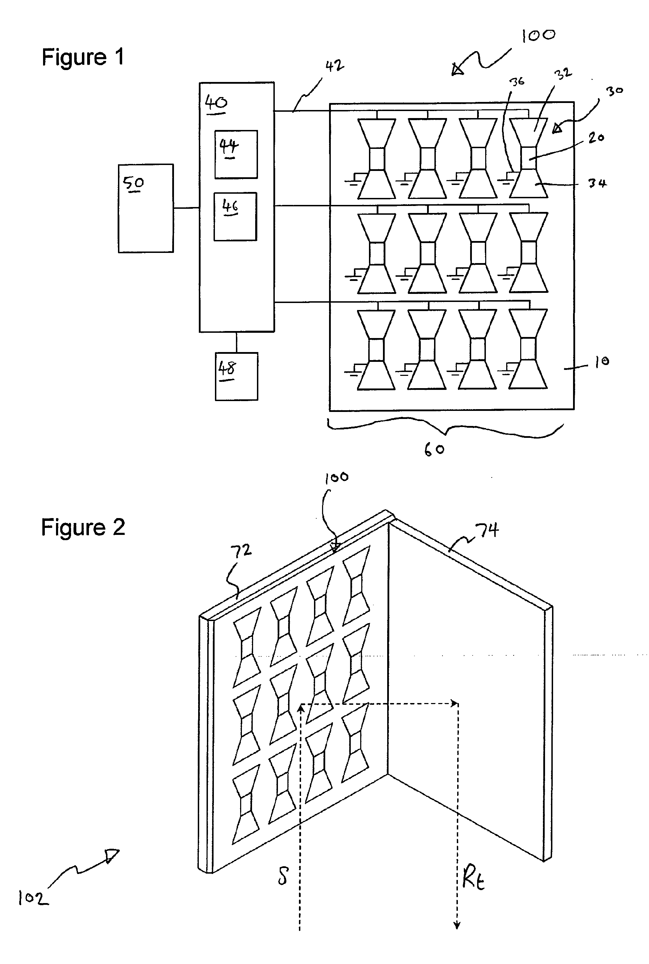

Referring to Figure 1 an identification tag or transponder, shown generally at 100, comprises a circuit board 10 upon which is mounted a plurality of active RF elements 30. The active RF elements 30 are arranged in an array 60. In this first embodiment, the array 60 is a regularly spaced 4 x 3 array. Other array configurations are possible.

A substantially planar RF reflector 72, shown in Figure 2, is provided behind the circuit board 10 and array 60 (i.e. directly behind as shown on the page in Figure 1 and parallel with the plane of the board 10). The circuit board 10 is formed from a dielectric material.

Each active RF element 30 comprises a switching element, a first conductive antenna element 32 and a second antenna element 34. The switching element is, in this embodiment, a PIN diode 20. The antenna elements 32, 34, in this embodiment, are each trapezoidal and arranged together to represent a bow-tie type antenna. The elements 32, 42 are formed from a thin layer of deposited copper.

The PIN diode 20 is interposed between the first antenna element 32 and the second antenna element 34 such that the PIN diode 30 electrically connects these elements 32, 34. The first antenna element connects to the anode portion of the PIN diode. The second antenna element connects to the cathode portion of the PIN diode.

A tag signal generator unit 40 is connected, by a set of tracks 42, to the first antenna element 32 of each active element 30. Each second antenna element 34 is provided with a ground connection 36.

The set of tracks 42 is such that a unique electrical connection extends from each first antenna element 32 to the signal generator, such that each antenna element 32, and hence each RF element 30 is uniquely addressable.

The tag signal generator unit 40 may operate to provide an identical modulating bias voltage signal to each of the active RF elements 30 via each first antenna element 32.

Alternatively, the tag signal generator unit 40 may address a first modulating bias voltage signal to a first active element and a different modulating bias voltage signal to a further active element and so on. Such a facility permits the tag to perform, for example, beam steering operations, should this be desired.

The tag signal generator unit 40 is arranged to drive the array 60 and thereby apply a modulating bias signal to the active elements 30. As such the signal generator 40 may be considered a modulator.

The tag 100 is further provided with a sensor 50 which is electrically connected to the signal generator unit 40.

The signal generator 40 is further connected to a memory device 48 which stores a predetermined identifier (for example a unique pseudo noise code) associated with the tag 100.

The signal generator unit 40 further comprises a signal processor 44, operable to receive the sensor 50 output, and operable to access the data stored in memory 48, such that the signal generator unit 40 may suitably convert/encode the sensor output and/or the predetermined identifier for application to the array 60.

The sensor 50 is provided with a transducer operable to monitor at least one environmental parameter (e.g. temperature, pressure, electromagnetic parameters etc.) and generate a corresponding electrical signal. As such the sensor 50 can output a parameter data signal to the signal generator unit 40.

A power supply unit 46 (e.g. a battery) is connected to power the tag 100.

Prior to operation, the tag 100 is typically deployed into an environment (for example on the side of a vehicle).

Once deployed, the signal generator 40 operates to apply a predetermined modulating bias signal to the array 60 of active RF elements 30. The array of active elements 30 represent a reflection coefficient where the bias signal applied to the array 60 tends to vary the reflection coefficient of the tag. Consequently, RF radiation incident upon the activated element array 60 will be affected depending on the reflection coefficient at the moment of incidence. In particular, the incident RF radiation may have its phase affected depending on the reflection coefficient of the array 60 and a predetermined modulating bias signal may switch between two reflection coefficients to affect a digitally phase modulated return.

The modulating bias signal may be further predetermined insofar as it repeatedly applies a signal representing the predetermined identifier to the array 60, which identifier is unique to the particular tag 100. Such a predetermined identifier may be a pseudo noise sequence.

Alternatively, the bias signal may be predetermined insofar as it applies parameter data from sensor 50 to the array 50, which data is encoded according to a predetermined protocol such as phase shift keying.

Further, the predetermined modulating bias signal may interleave periods of predetermined-identifier modulation with periods of predetermined-protocol modulation.

Moreover, there may be a level of predetermined modulation imposed on other modulations so as to disguise any RF radiation reflected by the tag and to promote a higher correlation gain during processing.

In particular, a pseudo noise sequence (alternatively referred to as a pseudo noise code) may be used to encode modulations relating to the parameter data transmission. More specifically, a pseudo noise code may be 'multiplied' (by performing an exclusive OR operation, i.e. XORd) with digital parameter data to provide a modulating signal. The pseudo noise code would have a much higher data rate (alternatively referred to as the chipping rate) compared to the digital parameter data signal. The higher rate pseudo noise sequence would have a wider bandwidth and therefore the 'multiplication' of the two signals would result in a signal covering a wide frequency range; thus an effect of the 'multiplication' would be that the spectral power density would tend to be low, often lower than the noise floor, and thus the returned RF signal should be difficult to detect without knowledge of the pseudo noise code.

Referring to Figure 2, there is shown generally at 102 an identification tag 100 integrated into a corner reflector. The integrated identification tag 102 is shown comprising an array 60 of active elements 30 mounted on a first surface plate 72 of a corner reflector. For sake of clarity, other components of the tag 100 are not shown in Figure 2. The corner reflector further comprises a second surface plate 74 extending at an angle of inclination from the first plate 72.

Thus the corner reflector of the Figure 2 embodiment is formed simply from two planar reflectors 72 and 74. In other embodiments of the invention, the reflector associated with the tag 100 may have a different form. For example, the reflector could be a single cubic corner reflector (spanning the entire RF element array 60), or could comprise a plurality of smaller cubic corner reflectors (i.e. smaller such that a plurality of such reflectors are required to span the array 60).

In embodiments where a plurality of smaller cubic corner reflectors is provided, such reflectors will tend to be arranged in a planar structure and will define a plane. The array 60 of RF elements 30, which itself defines a plane can be mounted at the planar reflector in a parallel arrangement with the plane of the plurality of cubic reflectors.

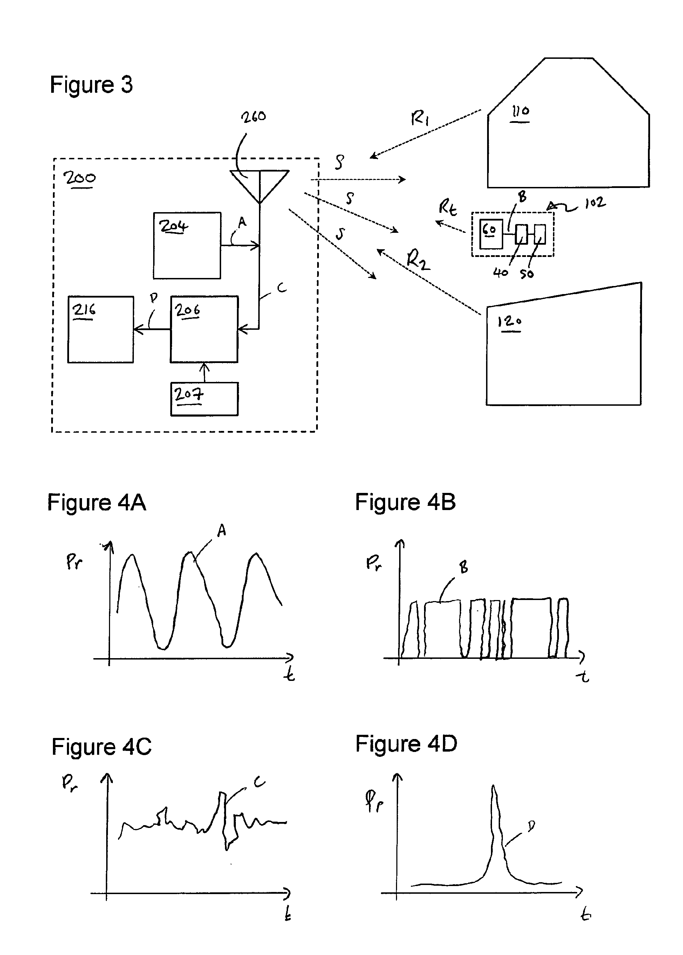

Referring to Figure 3, the integrated identification tag 102 is shown deployed in an environment 300. The environment comprises objects 110 and 120 in proximity to the identification tag 102. The environment is within range of a detection unit 200 for detecting the tag 102.

The detection unit 200 is in the form of a combined RF transmitter and receiver 200, and comprises an antenna 260 and a unit signal generator 204. The antenna 260 is operably connected to, and configured to be driven by, the unit signal generator 204.

Further, the detection unit 200 comprises a signal processor 206 and an associated memory device 207 for storing predetermined tag identification data. The signal processor 206 is operably connected to, and configured to receive signals from the antenna 260 and the unit memory device 207. The signal processor 206 can provide an output 208 to an alert-issuing module 216. In the present embodiment, the detection unit 200 comprises the alert module 216. However in other embodiments the detection unit 200 may be absent an alert module 216, though an output 208 would nonetheless be present in order to interface such a detection unit with external alert equipment.

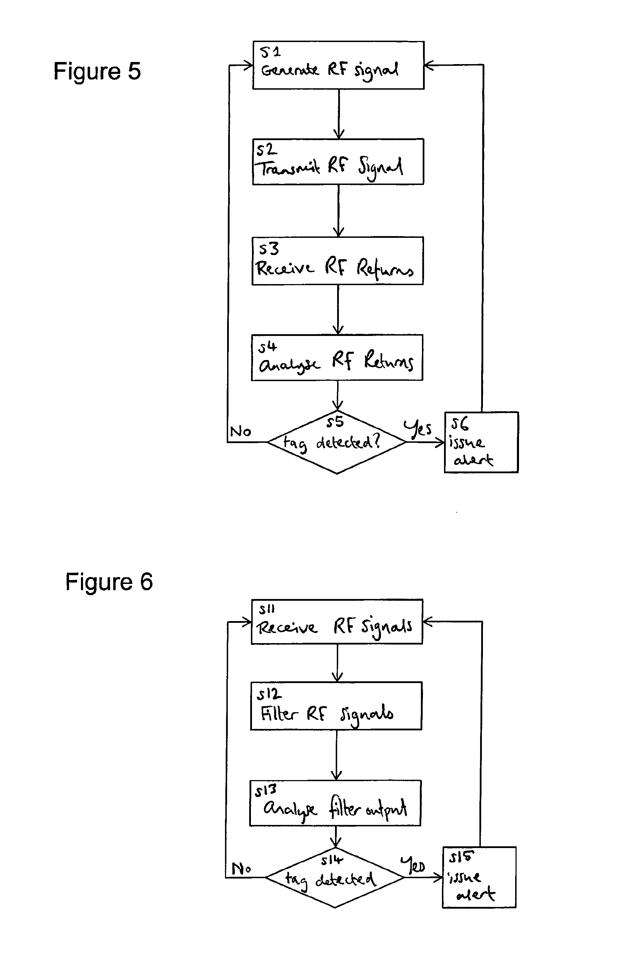

In operation, the combined transmitter and receiver 200 may interrogate the environment 300 with interrogatory signal S and process returned signals R1, R2 and Rt in accordance with the flow chart of figure 5.

As a first step S1 the combined transmitter and receiver 200 generates an electrical RF signal A at the signal generator 204. As can be seen from Figure 4a, the electrical RF signal A is a substantially sinusoidal continuous wave. The electrical RF signal may be non-continuous in other embodiments. Further, in alternative embodiments, other electrical RF signals could be used such as chirp signals.

At step S2 the electrical RF signal A is applied to the antenna 260, causing the antenna 260 to transmit the interrogatory signal S into the environment 300.

Once transmitted, the signal S propagates onto not only the deployed tag 102 but also the objects 110 and 120. Each of these provide a return signal to the antenna 260.

In comparison to the tag 102 which is small (for example having a cross section of 150mm x 150mm), the objects 110 and 120 are large and have a large radar cross-section. Thus the interrogatory signal S will be more strongly reflected back to the antenna 260 at the objects 110 and 120 (i.e. the radar returns from objects 110 and 120, when illuminated by interrogatory signal S are of higher power then the equivalent returns from the tag 102). As shown in Figure 3, the object 110 provides a return RF signal R1, and the object 120 provides a return RF signal R2.

However, as the interrogatory signal S impinges on the identification tag 102 the bias signal modulating the array 60 of active elements 30 modulates the reflected interrogatory signal S in a predetermined manner with modulating bias signal B. In the present embodiment, the predetermined manner is a predetermined digital modulation, whereby the modulating signal B (represented generally at Figure 4B) is produced by XOR-ing the sensor parameter data with the tag-stored pseudo noise code. Thus, the signal Rt returned to the antenna 260 from the tag 102 has a predetermined modulation scheme applied to it, which can allow the tag to be identified.

Thus, subsequent to the transmission of the interrogatory signal S at step S3 the antenna 260 receives the returned RF signals R1, R2 and Rt , and converts these signals into electrical signals.

As represented in Figure 4C, the electrical signal C derived from the returned RF signals R1, R2 and Rt, is a combination of each of signals R1, R2 and Rt. As a result of their relatively large amplitude, the return signals R1 and R2 tend to act as clutter, obscuring the signal Rt.

Having received these signals, they are fed into the signal processor 206 for frequency conversion (in particular mix down conversion to facilitate further signal processing) and are then cross-correlated with the predetermined modulation scheme.

The signal processor 206 is able to call upon the predetermined tag identifier, as stored in the memory device 208, which informs the signal processor 206 of the predetermined modulation (e.g. a particular pseudo noise code) that the deployed tag 102 is applying. Thus at step S4 the signal processor 206 cross-correlates the combined returned RF signals with the predetermined modulation (e.g. pseudo noise code) of tag 102 to generate the output signal D.

In more detail, the cross-correlation analysis at step S4 involves sliding a copy of the predetermined pseudo noise sequence along the received signal C (shown at figure 4C), performing an XOR and bitwise addition. When the pseudo noise sequence is aligned with the pseudo noise sequence embedded in the received signal, a large peak will be seen (thus providing the processing/correlation gain). The XOR process is reversible so where the pseudo noise code has been used to encode the digital sensor data, XORing the pseudo noise code with the data a second time provides the original sensor parameter data stream.

Thus, where the returned RF signals contain a return signal Rt from the tag 102, the cross correlation at the signal processor 206 results in an output D with a distinct peak. Such a distinct peak is shown in figure 4D, which represents the output signal D where a tag return Rt is present amongst the RF return signals.

At step S5 the alert unit 216 receives the output signal D and if a clear peak is present, the alert unit 216 triggers an alert to indicate the detection of the tag 102.

If no tag 102 is present, there will be no distinct peak in the output signal D and the alert unit 216 will not issue an alert.

Alternatively, the invention may operate according to the general steps shown in Figure 6. Such a mode of operation would be particularly applicable to situations where the detection of the tag 100 is to be carried out in the absence of a detection unit 200 interrogatory signal i.e. if the detection unit is not provided with a signal generator and transmitter, or if it is inappropriate for the detection unit 200 to transmit a signal (e.g. so that the detection unit 200 may remain covert).

In such an alternative mode of operation, the tag 102 operates generally as described above. However, the detection unit, instead of generating its own interrogatory signal, relies upon a signal native to the environment. Such signals, often referred to as signals of opportunity, may be signals from GSM transmitters, HSDPA transmitters, ADS-B transmitters, Public Radio transmitters, Television broadcast signals, etc. Any transmission protocol anticipated as likely to be native to the environment in which the tag is deployed may be suitable.

Thus the detection unit 200 in the alternative operation mode may, as per step S11, receive a plurality of signals from the RF environment 300, filter these into their likely component signals, as per step S12, and subsequently analyse each of these filtered-out components at step S13.

More specifically, at step S13 the signal processor of the detection unit 200 will cross-correlate the filtered component (e.g. the GSM component) with the predetermined modulation (e.g. the pseudo noise code) potentially applied to that component at the tag 102. Consequently the signal processor of the detection unit 200 may output a signal indicative of whether the tag modulation scheme (e.g. pseudo noise code) has been detected amongst the received signals. Such an indicative signal is fed into an alert unit to instantiate, as per steps S14 and S15 an alert when the predetermined modulation (e.g. pseudo noise code), and hence the tag, has been detected.

As an alternative to a tag which applies a pseudo noise code to the incident RF signals, the invention may provide a tag which applies a false Doppler shift to the incident RF signals. Such an alternative may be suitable provided that the false Doppler shift implies a velocity much greater than any velocity likely in the environment. Accordingly, where such a tag is provided, the signal processor at the detection unit is provided with a Doppler filter and with a previously imputed record of the Doppler shift which the tag will falsify.

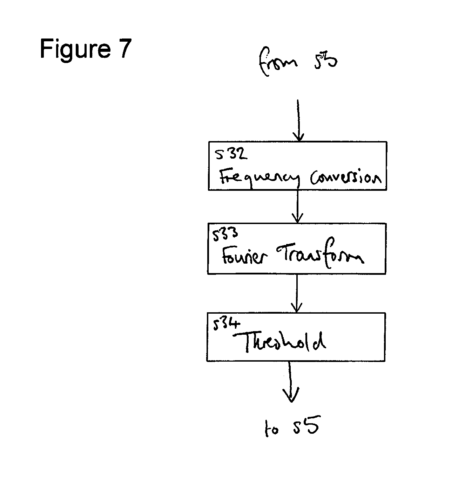

In such cases, and with reference to figure 7, the signal analysis step S4 (described in respect of Figure 5) involves firstly a step S32 of suitable frequency conversion of the received signal, followed secondly by the step S33 of performing a Fourier transform on the output of the step S32, followed by a thresholding operation 34 performed on the output of step S33, which operation 34 determines the detection, or not, of the tag.

Regarding fabrication, it is expected that the skilled reader would, once given the disclosure herein, be able to assemble the invention from known technologies and components relating to signal generation, signal processing, signal transmission/reception etc.

Nonetheless, it is noted that the reflecting surfaces of the corner reflector may be fabricated using known standard reflector materials such as a continuous layer of copper. However, any metal should suitable. Further as an alternative to a continuous layer of metal, a fine mesh of wires could be used as the reflector.

In some variants of the invention, the receiving antenna of the detection unit 200 may be configured to be directional. Such a directional antenna at the detection unit 200 will tend to detect the tag only when the main lobes of the antenna are oriented to point at the tag. Thus, by recording or monitoring the orientation of the antenna at the time of detection, a tracking operation can be performed.

Where the detection unit 200 generates an interrogatory signal (or where the exact location of a native transmitter is known) the range of the tag could also be calculated and recorded based on signal transit time.

For example, after step S3 of the method shown in Figure 5, the signal processor could perform a further step of extracting a timing impulse, which could be further processed to determine the range.

In general the above embodiments have discussed the deployment of a single tag into an environment, and the associated apparatus and method of detection such a tag. However it is within the scope of the invention that a plurality of tags may be deployed into an environment. In particular, it is contemplated that each tag may be configured to apply a unique and predetermined identifier (e.g. a pseudo noise code or false Doppler shift) to incident RF radiation, and that the associated detection unit(s) are provided with corresponding records of the unique predetermined identifiers. Thus the detection unit 200 is able to detect not only the presence of a tag, but can also uniquely identify the tag which has been detected.

As an alternative to PIN diodes as the switching element of the array, a MEMS switching device may be provided at each active RF element.

In embodiments previously described herein, the tag 100 is configured to modulate continuously once deployed. However in alternative embodiments, the tag may be operable to cease modulation for periods of time in order to conserve power. In such embodiments the tag would be further provided with a standby means, operable to fully activate the tag (i.e. to commence the predetermined modulation signal) in response to a particular interrogatory signal.

## Claims

1. An identification tag for modulating and returning an incident RF signal, the identification tag comprising:
A substantially planar reflector for reflecting the incident RF signal,
A substantially planar array of active RF elements arranged at the reflector,
Each active RF element comprising a switching element, a first conductive element, and a second conductive element, the switching element electrically interconnecting the first and second conductive antenna elements
A signal generator for applying a modulating bias signal to at least one active RF element, the modulating bias signal being selectable according to a predetermined modulation scheme,
the modulating bias signal thereby being configured to apply a predetermined modulation to the returned RF signal.

2. An identification tag according to claim 1, the tag further comprising:
A sensor for monitoring a parameter local to the tag, and thereby generating parameter data,
the sensor being operably connected to the signal generator such that the modulating bias signal may comprise the parameter data.

3. A tag according to claim 1 or claim 2, the identification tag further comprising
a memory device for storing a predetermined pseudo noise code,
the memory device being operably connected to the signal generator such that the modulating bias signal may be encoded by the predetermined pseudo noise code.

4. A tag according to claim 1 or claim 2 wherein the modulating bias signal applies a false Doppler shift to the returned signal.

5. A tag according to any one of the preceding claims further comprising at least one further planar RF reflector, inclined to the other planar reflector to provide a corner reflector.

6. A tag according to any one of the preceding claims wherein the array of active RF elements are mounted onto the reflector.

7. A tag according to any one of the preceding claims wherein the signal generator is connected to a first active element by a first connection, and is connected to a second active element by a second connection, and is operable to generate a first modulating bias signal for output to the first active element, and is operable to generate a second modulating bias signal for output to the second active element, the first and second modulating bias signals being distinct.

8. A tag according to any one of the preceding claims wherein the switching elements are PIN diodes.

9. A detection unit for use in conjunction with an identification tag according to any one of claims 1 - 8, the identification tag being operable to provide a predetermined modulating bias signal, the detection unit comprising
a receiver antenna, for receiving returned RF signals a signal processor operably connected to the receiver antenna and configured to detect a returned RF signal consistent with a native or interrogatory RF signal as modulated by the predetermined modulating bias signal of the identification tag.

10. A detection unit according to claim 9 further comprising A signal generator for generating an interrogatory RF signal A transmitter antenna, operably connected to the signal generator and thereby being for transmitting an interrogatory RF signal.

11. A detection unit according to claim 9 or 10 wherein the receiver is a directional receiver.

12. A method of detecting a tag, the tag being for modulating and returning an incident RF signal, the method comprising:
i Deploying the tag in an environment, the environment including at least one transmitter for transmitting a reference RF signal ii Providing a receiver operable in the frequency range of the reference RF signal,
iii At the receiver, demodulating received reference RF signals according to the modulating bias signal applied at the tag,
iv determining whether a tag-modulated RF reference signal has been received, and
thereby determining whether the tag is present or not.
wherein the at least one transmitter is native to the environment, and is transmitting a signal for purposes other than detecting the tag, the reference RF signal thereby being a signal of opportunity.

13. A method according to claim 13 wherein the at least one transmitter native to the environment is at least one out of the group of: Base station transmitters for mobile telephony, ADS-B transmitters, Commercial Radio transmitters, and Television broadcast transmitters.

14. A method according to claim 12 or claim 13 wherein the tag is as according to any one of claims 1 to 8.
